(19) Europäisches Patentamt
European Patent Office
Office européen des brevets

(11) **EP 4 603 610 A1**

(12) **EUROPEAN PATENT APPLICATION**
published in accordance with Art. 153(4) EPC

(43) Date of publication:
**20.08.2025 Bulletin 2025/34**

(21) Application number: 23754991.0

(22) Date of filing: **19.05.2023**

(51) International Patent Classification (IPC):
$C22B\ 7/02^{(2006.01)}$      $C22B\ 19/32^{(2006.01)}$
$C22B\ 19/02^{(2006.01)}$      $C22B\ 7/00^{(2006.01)}$

(52) Cooperative Patent Classification (CPC):
**C22B 7/02; C22B 1/02; C22B 7/00; C22B 19/02; C22B 19/32; C22B 19/34;** Y02P 10/20

(86) International application number:
**PCT/KR2023/006857**

(87) International publication number:
**WO 2023/234608 (07.12.2023 Gazette 2023/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.10.2022 KR 20220132523**

(71) Applicant: **Korea Zinc Co., Ltd.**
**Seoul 06110 (KR)**

(72) Inventors:
• **CHOI, Heon Sik**
**542 Seoul (KR)**
• **KANG, Sung Moon**
**542 Seoul (KR)**

(74) Representative: **Angerhausen, Christoph Boehmert & Boehmert Anwaltspartnerschaft mbB Pettenkoferstrasse 22 80336 München (DE)**

(54) **METHOD FOR PRODUCING HIGH QUALITY REFINED IRON OXIDE FROM IRON OXIDE WHICH IS BY-PRODUCT OF ZINC SMELTING PROCESS**

(57) The present disclosure discloses a method for refining an iron oxide that is a by-product of a zinc smelting process, the method including a roasting process of roasting the iron oxide, a washing process of washing a roasted iron oxide cake with a washing water, and a filtering process of filtering the washed iron oxide cake, thereby providing refined iron oxide.

FIG. 1

**Description**

TECHNICAL FIELD

The present disclosure relates to a method for removing impurities such as zinc, potassium, sodium, and sulfur from iron oxide, which is a by-product of a zinc smelting process, to produce high-grade iron oxide having an iron content of 60% or more, and relates to a pyrometallurgical process of roasting iron oxide to primarily remove a sulfur component and a hydrometallurgical process of removing residual impurities remaining in the iron oxide. Then, the present disclosure relates to a selective zinc precipitation (SZP) process of recovering the removed zinc.

BACKGROUND

Methods for extracting zinc from a zinc concentrate include a pyrometallurgical method and a hydrometallurgical method. Among these, the hydrometallurgical method refers to a method for extracting high-purity zinc from the zinc concentrate through roasting, leaching, solution purification, and final electrolysis processes.

Iron, which is melted together with zinc in hydrometallurgy, is converted into iron oxide such as jarosite, goethite, or hematite through a separate process, and then the iron oxide is separated and discharged.

Typically, the iron oxide, which is a by-product of a zinc smelting process, contains 40% to 50% of iron and others including 1% to 5% of zinc, 1% to 5% of potassium, 1% to 5% of sodium, and 5% to 10% of sulfur based on the total weight thereof. The iron oxide may also contain carbon, magnesium, calcium, aluminum, and the like, in addition to iron, zinc, potassium, sodium, and sulfur. Generation of a large amount of iron oxide having a low iron content causes a problematic increase in storage and transportation costs. Further, a high impurity content of such iron oxide makes it difficult to use it as a raw material of a steelmaking process and it is not easy to find a place to use it.

An object of the present disclosure is to provide a method capable of removing zinc, potassium, sodium, and sulfur, which are major impurities of iron oxide, and improving an iron content thereof by mingling pyrometallurgical and hydrometallurgical processes in order to solve problems of the related art as described above.

According to one embodiment of the present disclosure, there is provided a method for refining raw material iron oxide that is a by-product of a zinc smelting process, the method including a roasting process of roasting the raw material iron oxide, a washing process of washing a roasted iron oxide cake with a washing water, and a first filtering process of filtering the washed iron oxide cake, thereby providing refined iron oxide.

One embodiment of the present disclosure provides the method in which the roasting process has a roasting temperature ranging from 700 degrees C to 950 degrees C.

One embodiment of the present disclosure provides the method in which the roasting process further includes drying the iron oxide, and in the drying the iron oxide, a drying temperature ranges from 90 degrees C to 110 degrees C, and a drying time is 2 hours or more.

One embodiment of the present disclosure provides the method in which the roasting process is performed under an air atmosphere using a rotary kiln.

One embodiment of the present disclosure provides the method in which the washing process adds 140 g to 160 g of the roasted iron oxide cake per 1 L of the washing water to wash the roasted iron oxide cake.

One embodiment of the present disclosure provides the method in which the refined iron oxide contains 60 wt% or more of iron, 0.3 wt% or less of zinc, 0.1 wt% or less of potassium, 0.1 wt% or less of sodium, and 0.5 wt% or less of sulfur.

One embodiment of the present disclosure provides the method in which the washing process washes the roasted iron oxide cake with the washing water using an autoclave.

One embodiment of the present disclosure provides the method in which the washing process washes the roasted iron oxide cake with the washing water using an agitator.

One embodiment of the present disclosure provides the method in which the washing water has a temperature ranging from 130 degrees C to 150 degrees C in an autoclave.

One embodiment of the present disclosure provides the method in which the washing water has a temperature ranging from 130 degrees C to 150 degrees C with an agitator.

One embodiment of the present disclosure provides the method further including a selective zinc precipitation process of recovering zinc from the washing water filtered from the first filtering process, wherein the selective zinc precipitation process adds salt to the filtered washing water.

One embodiment of the present disclosure provides the method in which the salt is sodium carbonate.

One embodiment of the present disclosure provides the method in which in the selective zinc precipitation process, the filtered washing water has a temperature ranging from 50 degrees C to 70 degrees C and a pH ranging from 7 to 9.

With a method for refining iron oxide according to embodiments of the present disclosure, it is possible to manufacture high-grade iron oxide having an iron content of 60% or more by removing impurities from iron oxide, which is a by-product of a zinc smelting process. At this time, the removal rate of zinc, potassium, sodium, and sulfur is 90% or more.

The weight of the iron oxide may be reduced to about 60% of the initial weight as impurities are reduced, which may contribute to saving storage and transportation costs.

Further, the refined iron oxide has a low grade of impurities such as 0.3% or less of zinc and 0.5% or less of sulfur, and therefore, is available as a raw material for steelmakers, thereby contributing to resource recycling and reducing environmental pollution problems by reduced industrial waste generation.

BRIEF DESCRIPTION OF THE DRAWINGS

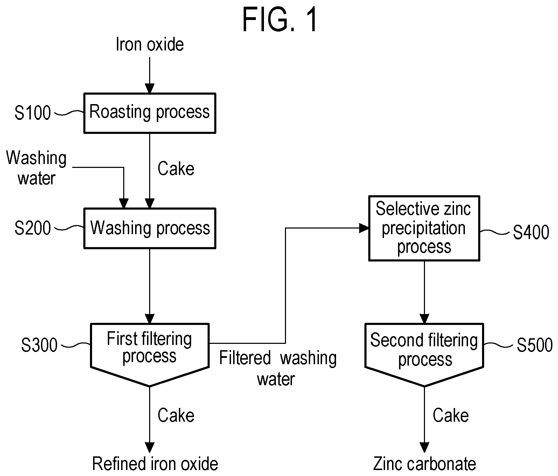

FIG. 1 is a flowchart illustrating a process of refining iron oxide to manufacture high-grade iron oxide, and recovering zinc from a filtered washing water according to an embodiment of the present disclosure.

DETAILED DESCRIPTION

Embodiments of the present disclosure are illustrated for describing the technical idea of the present disclosure. The scope of a right according to the present disclosure is not limited to the embodiments presented below or to the detailed descriptions of these embodiments.

The expressions "include", "provided with", "have" and the like used herein should be understood as open-ended terms connecting the possibility of inclusion of other embodiments, unless otherwise mentioned in a phrase or sentence including the expressions.

FIG. 1 is a flowchart illustrating a process of refining iron oxide to manufacture high-grade iron oxide, and recovering zinc from a filtered washing water according to an embodiment of the present disclosure. Referring to FIG. 1, an iron oxide purification process according to an embodiment of the present disclosure will be described.

Roasting Process S100

A roasting process S 100 is for removing impurities by thermally decomposing iron oxide, and may include a step of roasting the iron oxide at a high temperature. The step of roasting the iron oxide may be performed using a rotary kiln under an air atmosphere. At this time, the temperature at which the iron oxide is roasted may range from 700 degrees C to 950 degrees C. If the roasting temperature is lower than 700 degrees C, a decomposition reaction of jarosite, which will be described below, may not occur, and if the roasting temperature is higher than 950 degrees C, a zinc oxide is formed more than a zinc sulfate in a reaction of oxygen and a zinc sulfide, which will be described below. This may make it difficult to remove zinc in a subsequent hydrometallurgical process. Further, the roasting temperature may particularly range from 700 degrees C to 800 degrees C, and more particularly, range from 750 degrees C to 800 degrees C.

Raw material iron oxide roasted in the roasting process may include jarosite such as K-jarosite ($KFe_3(SO_4)_2(OH)_6(s)$) or Na-jarosite ($NaFe_3(SO_4)_2(OH)_6(s)$).

Major reactions of the roasting process are as follows.

[Equation 1-1]

$$KFe_3(SO_4)_2(OH)_6(s) = KFe(SO_4)_2(s) + Fe_2O_3(s) + 3H_2O(g)$$

[Equation 1-2]

$$NaFe_3(SO_4)_2(OH)_6(s) = NaFe(SO_4)_2(s) + Fe_2O_3(s) + 3H_2O(g)$$

[Equation 2-1]

$$2KFe(SO_4)_2(s) = K_2SO_4(s) + Fe_2O_3(s) + 3SO_2(g) + 1.5O_2(g)$$

[Equation 2-2]

$$2NaFe(SO_4)_2(s) = Na_2SO_4(s) + Fe_2O_3(s) + 3SO_2(g) + 1.5O_2(g)$$

K-jarosite may be decomposed into $KFe(SO_4)_2(s)$, $Fe_2O_3(s)$ and $H_2O(g)$ as in the above equation 1-1. Then, $KFe(SO_4)_2(s)$ may again be decomposed into $K_2SO_4(s)$, $Fe_2O_3(s)$, $SO_2(g)$ and $O_2(g)$ as in the above equation 2-1.

Na-jarosite may be decomposed into $NaFe(SO_4)_2(s)$, $Fe_2O_3(s)$ and $H_2O(g)$ as in the above equation 1-2. Then, $NaFe(SO_4)_2(s)$ may again be decomposed into $Na_2SO_4(s)$, $Fe_2O_3(s)$, $SO_2(g)$ and $O_2(g)$ as in the above equation 2-2.

Equations 1-1 and 1-2 may be reactions occurring at 450 degrees C or higher. Equations 2-1 and 2-2 may be reactions occurring at 680 degrees C or higher.

The raw material iron oxide may contain zinc (Zn) as an impurity. The zinc as an impurity may be contained in the form of a zinc sulfide (ZnS), for example. In the roasting process S100, a zinc sulfide may react with oxygen to form a zinc sulfate ($ZnSO_4$) as in the following equation 3.

[Equation 3]

$$ZnS(s) + 2O_2(g) = ZnSO_4(s)$$

At this time, oxygen that reacts with the zinc sulfide may be injected from the outside, or may be oxygen generated during the decomposition of jarosite, particularly oxygen generated in Equation 2-1 or in Equation 2-2. If the roasting temperature is high, zinc sulfide may react with oxygen to form zinc oxide (ZnO). For example, if the roasting temperature is higher than 400 degrees C, zinc sulfide may form zinc oxide in the process of reacting with oxygen. If the roasting temperature is higher than 950 degrees C, a greater amount of zinc oxide is formed. Since such zinc oxide is not ionized, it may be difficult to remove it in a washing process, which is a subsequent hydrometallurgical process.

The roasting process S100 may include a drying step of evaporating the entirety or a part of moisture contained in the iron oxide to provide dry iron oxide. The drying step may be performed using a rotary kiln, but is not limited thereto.

The temperature at which the drying step is performed may be 90 degrees C or higher. Since the temperature at which the drying step is performed is lower than the temperature at which the iron oxide roasting step is performed, the drying step may be followed by the iron oxide roasting step. At this time, since the drying step and the iron oxide roasting step progress as the temperature of the iron oxide in the rotary kiln rises, the drying step and the iron oxide roasting step may not be clearly distinguished.

The drying step may be performed separately before the iron oxide roasting step. At this time, the temperature at which the drying step is performed may be 90 degrees C or higher. If the drying temperature is lower than 90 degrees C, drying may not be performed normally. Further, the drying temperature may particularly range from 90 degrees C to 110 degrees C. The time during which the drying step is performed may be 2 hours or more. Further, the time during which the drying step is performed may be particularly 2 hours or more and 24 hours or less, and more particularly 2 hours or more and 4 hours or less.

A roasted iron oxide cake, having passed through the roasting process S100, may contain 4 wt% or less of sulfur (S) based on the total weight thereof. The roasted iron oxide cake may contain impurities such as zinc, potassium, sodium, and sulfur, which are the form of water-soluble substances, and among these, the sulfur takes the form of a gas. For example, the impurities contained in the roasted iron oxide cake may be zinc sulfate ($ZnSO_4(s)$), potassium sulfate ($K_2SO_4(s)$) and/or sodium sulfate ($Na_2SO_4(s)$). At this time, the removal rate of sulfur may be 60% or more, and the removal rate of sodium may be 10% or more.

Washing Process S200

A washing process S200 is a process of washing the roasted iron oxide cake with a washing water to remove impurities. The washing water used in the washing process S200 may be water. The washing process may be performed using water at room temperature. Specifically, the washing process using an agitator may be performed at a temperature ranging from 20 degrees C to 30 degrees C. Further, water at different temperatures may be used to improve the washing efficiency.

The washing process S200 may be performed at atmospheric pressure. The washing process S200 may be performed for 1 hour to 3 hours.

For effective washing of the iron oxide cake, the washing process may be performed by adding 140 g to 160 g of the roasted iron oxide cake per 1 L of the washing water. If less than 140 g of the roasted iron oxide cake is added per 1 L of the washing water, a greater amount of washing water may be used and the scale of equipment may increase. The washing efficiency may decrease if more than 160 g of the roasted iron oxide cake is added per 1 L of the washing water.

Impurities removed in the washing process may be water-soluble impurities contained in the roasted iron oxide cake. These water-soluble impurities may include zinc sulfate ($ZnSO_4(s)$), potassium sulfate ($K_2SO_4(s)$) and/or sodium sulfate ($Na_2SO_4(s)$).

In order to improve the impurity removal efficiency, the roasted iron oxide cake may be washed using an autoclave after raising the temperature and pressure in the washing process S200. The washing process using the autoclave may be performed at a pressure of 2 bar to 3 bar and may be performed for 1 hour to 3 hours. At this time, if the time of the washing process using the autoclave is less than 1 hour, the impurity removal efficiency may decrease, and if the time of the washing process exceeds 3 hours, the prolonged process time has a negligible effect on the impurity removal efficiency but may cause an increased cost.

In the washing process using the autoclave, the temperature of the washing water may range from 130 degrees C to 150 degrees C. At this time, if the temperature of the washing water is less than 130 degrees C, the impurity control efficiency may decrease.

Iron oxide obtained through the washing process using the autoclave may exhibit a higher impurity removal rate than iron oxide obtained through a washing process at room temperature and atmospheric pressure.

First filtering Process S300

Refined iron oxide may be obtained by filtering, using a filter, the washed iron oxide cake. The refined iron oxide, obtained after the filtering process, may contain 3 wt% or less of zinc, 0.8 wt% or less of sodium, 3 wt% or less of potassium, and/or 8 wt% or less of sulfur. The refined iron oxide may have an iron content of 60 wt% or more since impurities were removed. The refined iron oxide may be particularly high-grade iron oxide containing 0.3 wt% or less of zinc, 0.1 wt% or less of sodium, 0.1 wt% or less of potassium, and 0.5 wt% or less of sulfur.

Selective Zinc Precipitation Process S400

The filtered washing water, which remains after filtering the washed iron oxide cake using the filter and separating the refined iron oxide, may contain zinc. A selective zinc precipitation process, that is, a SZP process is a process of recovering zinc from the filtered washing water.

In the selective zinc precipitation process S400, salt may be added to the filtered washing water. At this time, the salt may be sodium carbonate ($Na_2CO_3$). The selective zinc precipitation process S400 may be under a pH ranging from 7 to 9 by the addition of salt. At this time, if the pH is less than 7, the zinc recovery rate may decrease, and if the pH exceeds 9, components other than zinc may be precipitated.

In the selective zinc precipitation process S400, the temperature of the filtered washing water may range from 50 degrees C to 70 degrees C. At this time, if the temperature of the filtered washing water is less than 50 degrees C, the process efficiency may decrease.

The zinc contained in the filtered washing water may be precipitated in a solid state as in the following equation 4 by a reaction with the salt.

$$[Equation\ 4]$$

$$ZnSO_4(aq) + Na_2CO_3(s) = ZnCO_3(s) + Na_2SO_4(aq)$$

As a result of the above reaction, the zinc contained in the filtered washing water may be precipitated in the form of $ZnCO_3(s)$ through a second filtering process S500, and 99% or more of zinc in the filtered liquid may be recovered.

From the above processes, high-grade iron oxide having an iron content of 60% or more may be manufactured by removing impurities from an iron oxide, which is a by-product of a zinc smelting process. At this time, the removal rate of zinc, potassium, sodium, and sulfur is 90% or more.

The weight of the iron oxide is reduced to about 60% of the initial weight as the impurities are reduced. Further, the refined iron oxide has a low grade of impurities such as 0.3% or less of zinc and 0.5% or less of sulfur.

**[Examples]**

The present disclosure will be described in more detail using the following examples and comparative Examples. However, the technical scope of the present disclosure is not limited only to the following examples.

Roasting Process S100

Table 1 shows major components except for water in raw material iron oxide, which is a by-product of zinc smelting according to an embodiment of the present disclosure.

[Table 1]

| Division | Fe | Zn | Na | K | S |
|---|---|---|---|---|---|
| Weight% | 41.7 | 1.76 | 0.71 | 2.26 | 7.90 |

(1) Drying Step

Raw material iron oxide was dried at 100 degrees C for 24 hours. At this time, the content of moisture in the dried iron oxide was 24%.

(2) Roasting Step

The dried iron oxide was roasted at 700 degrees C, 750 degrees C, 800 degrees C, 850 degrees C, and 950 degrees C for 2 hours.

A reduction in the weight of the iron oxide depending on each roasting temperature is as follows.

[Table 2]

| Division | 700°C | 750°C | 800°C | 850°C | 950°C |
|---|---|---|---|---|---|
| Weight Reduction(%) | 23.2 | 24.7 | 25.4 | 26.0 | 27.0 |

The weight % of components contained in the roasted iron oxide cake and the impurity removal rate depending on each roasting temperature are as follows.

[Table 3]

| | Roasting Temperature | Division | Fe | Zn | Na | K | S |
|---|---|---|---|---|---|---|---|
| Example 1 | 700°C | Weight% | 53.9 | 2.29 | 0.79 | 2.98 | 3.72 |
| | | Removal Rate (%) | | 0.12 | 14.78 | 0.52 | 63.8 |
| Example 2 | 750°C | Weight% | 55.1 | 2.34 | 0.84 | 3.05 | 3.51 |
| | | Removal Rate (%) | | 0.04 | 10.53 | 0.46 | 66.5 |
| Example 3 | 800°C | Weight% | 55.8 | 2.35 | 0.85 | 3.09 | 3.13 |
| | | Removal Rate (%) | | 0.34 | 10.52 | 0.14 | 70.4 |
| Example 4 | 850°C | Weight% | 56.2 | 2.36 | 0.87 | 3.09 | 3.22 |
| | | Removal Rate (%) | | 0.77 | 9.13 | 0.81 | 69.8 |
| Example 5 | 950°C | Weight% | 56.4 | 2.41 | 0.90 | 3.13 | 2.47 |
| | | Removal Rate (%) | | 0.14 | 7.37 | 0.96 | 77.2 |

Washing Process S200 and First Filtering Process S300

150 g of the roasted iron oxide cake was added per 1 L of water, and then the added roasted iron oxide cake was stirred and washed at room temperature (25 degrees C) and atmospheric pressure (1 bar) for 2 hours. After completion of washing, the washing water was put into and filtered by a filter to separate the iron oxide and the filtered liquid. Thereafter, the iron oxide was dried, and remaining weight measurement and component analysis were performed thereon. For comparison, non-roasted iron oxide was tested under the same experimental conditions. At this time, the content of moisture in the dried iron oxide was 30%.

As a result of washing and filtering the roasted iron oxide cake depending on each roasting temperature, the weight% of components contained in the refined iron oxide and the impurity removal rate are as follows.

[Table 4]

| | Roasting Temperature | Division | Fe | Zn | Na | K | S |
|---|---|---|---|---|---|---|---|
| Example 1 | 700°C | Weight% | 65.2 | 0.29 | 0.18 | 0.15 | 0.48 |
| | | Removal Rate (%) | | 89.8 | 81.8 | 96.1 | 89.7 |
| Example 2 | 750°C | Weight% | 65.6 | 0.28 | 0.09 | 0.09 | 0.35 |
| | | Removal Rate (%) | | 90.0 | 91.2 | 97.5 | 91.7 |

(continued)

| | Roasting Temperature | Division | Fe | Zn | Na | K | S |
|---|---|---|---|---|---|---|---|
| Example 3 | 800°C | Weight% | 67.5 | 0.44 | 0.04 | 0.09 | 0.21 |
| | | Removal Rate (%) | | 84.5 | 95.7 | 97.6 | 94.5 |
| Example 4 | 850°C | Weight% | 64.8 | 0.73 | 0.06 | 0.12 | 0.35 |
| | | Removal Rate (%) | | 73.7 | 93.9 | 96.8 | 90.7 |
| Example 5 | 950°C | Weight% | 64.1 | 2.12 | 0.01 | 0.02 | 0.04 |
| | | Removal Rate (%) | | 22.7 | 98.9 | 99.5 | 98.7 |
| Comparative Example 1 | No Roasting | Weight% | 43.3 | 1.27 | 0.71 | 2.39 | 7.53 |
| | | Removal Rate (%) | | 30.5 | 3.4 | 0.1 | 8.2 |

It was found from the experimental results that the examples in which the iron oxide was washed after having passed through the roasting process obtained a higher impurity removal rate than the comparative example in which the iron oxide was washed without roasting. Further, it can be said that impurities were best removed in a case of washing the iron oxide after roasting it at 750 degrees C (Example 2) since all removal rates of four kinds of impurities including zinc, sodium, potassium, and sulfur were 90% or more.

Washing Process Using Autoclave

In order to determine the effect of temperature in the washing process, washing processes at 60 degrees C, 90 degrees C, and 140 degrees C (under a pressure of 2.5 bar) using an autoclave were respectively performed on roasted iron oxide, which was roasted at 750 degrees C. At this time, the washing was performed by changing only the temperature of water while equally maintaining the stirring time (2 hours) and the added amount of iron oxide (150 g of the roasted iron oxide cake per 1 L of water). After washing, the iron oxide was filtered in the same way as in the above experiments, and weight measurement and component analysis were performed thereon. At this time, the weight% of components contained in the iron oxide and the impurity removal rate are as follows.

[Table 5]

| | Washing Water Temperature | Division | Fe | Zn | Na | K | S |
|---|---|---|---|---|---|---|---|
| Example 6 | 140°C | Weight% | 67.9 | 0.15 | 0.07 | 0.08 | 0.32 |
| | | Removal Rate (%) | | 94.9 | 98.0 | 94.0 | 92.9 |
| Comparative Example 2 | 60°C | Weight% | 65.7 | 0.27 | 0.09 | 0.09 | 0.34 |
| | | Removal Rate (%) | | 90.4 | 91.6 | 97.6 | 91.9 |
| Comparative Example 3 | 90°C | Weight% | 65.7 | 0.27 | 0.08 | 0.08 | 0.34 |
| | | Removal Rate (%) | | 90.4 | 91.9 | 97.9 | 91.9 |

The impurity removal efficiency slightly increases as the temperature of the washing water increases in the washing process, but Comparative Examples 2 and 3 do not show a large difference in the impurity removal rates compared to Example 2. However, Example 6 in which washing was performed using the autoclave at a pressure of 2.5 bar and a temperature of 140 degrees C obtained an increased impurity removal rate compared to Example 2 in which no autoclave is used.

Selective Zinc Precipitation Process S400 and Second Filtering Process S500

A selective zinc precipitation process was performed in order to recover zinc in the filtered washing water. First, the temperature of the filtered washing water was raised to 60 degrees C, and then $Na_2CO_3$ was continuously added so as to maintain the pH of the filtered washing water at 8. After stirring it for 3 hours to mix the added $Na_2CO_3$ well, it was filtered using a filter. Then, after drying the filtered cake, weight measurement and component analysis were performed thereon.
The filtered washing water had 2,950 mg/l of zinc, and after having passed through the selective zinc precipitation process, the zinc in the filtered liquid was reduced to 2.65 mg/l. That is, the zinc was precipitated in the form of $ZnCO_3(s)$,

and 99% or higher of zinc in the filtered washing water could be recovered. At this time, a precipitate was generated by 6.5 g per 1 L of the filtered washing water.

Although the embodiments of the present disclosure have been described with reference to the accompanying drawings, those skilled in the art to which the present disclosure pertains can understand that the present disclosure may be implemented in other specific forms without changing the technical idea or essential features of the present disclosure.

Therefore, the embodiments described above should be understood as illustrative in all respects and not limiting. The scope of the present disclosure is indicated by the appended claims rather than the detailed description, and all changes or modifications derived from the meaning and scope of the claims and equivalent concepts thereof should be construed as being included in the scope of the present disclosure.

**Claims**

1. A method for refining a raw material iron oxide that is a by-product of a zinc smelting process, the method comprising:

   a roasting process of roasting the raw material iron oxide;
   a washing process of washing a roasted iron oxide cake with a washing water; and
   a first filtering process of filtering the washed iron oxide cake, thereby providing refined iron oxide.

2. The method of claim 1, wherein the roasting process has a roasting temperature ranging from 700 degrees C to 950 degrees C.

3. The method of claim 1, wherein the roasting process further includes drying the iron oxide, and
   wherein in the drying the iron oxide, a drying temperature ranges from 90 degrees C to 110 degrees C, and a drying time is 2 hours or more.

4. The method of claim 1, wherein the roasting process is performed under an air atmosphere using a rotary kiln.

5. The method of claim 1, wherein the washing process adds 140 g to 160 g of the roasted iron oxide cake per 1 L of the washing water to wash the roasted iron oxide cake.

6. The method of claim 1, wherein the refined iron oxide contains 60 wt% or more of iron, 0.3 wt% or less of zinc, 0.1 wt% or less of potassium, 0.1 wt% or less of sodium, and 0.5 wt% or less of sulfur.

7. The method of claim 1, wherein the washing process washes the roasted iron oxide cake with the washing water using an autoclave.

8. The method of claim 1, wherein the washing process washes the roasted iron oxide cake with the washing water using an agitator.

9. The method of claim 7, wherein the washing water has a temperature ranging from 130 degrees C to 150 degrees C.

10. The method of claim 8, wherein the washing water has a temperature ranging from 20 degrees C to 30 degrees C.

11. The method of claim 1, further comprising a selective zinc precipitation process of recovering zinc from the washing water filtered from the first filtering process,
    wherein the selective zinc precipitation process adds salt to the filtered washing water.

12. The method of claim 11, wherein the salt is sodium carbonate.

13. The method of claim 11, wherein in the selective zinc precipitation process, the filtered washing water has a temperature ranging from 50 degrees C to 70 degrees C and a pH ranging from 7 to 9.

# FIG. 1

Iron oxide

S100 — Roasting process

Washing water

Cake

S200 — Washing process

Selective zinc precipitation process — S400

S300 — First filtering process

Filtered washing water

Second filtering process — S500

Cake

Refined iron oxide

Cake

Zinc carbonate

## INTERNATIONAL SEARCH REPORT

International application No.

**PCT/KR2023/006857**

| A. | CLASSIFICATION OF SUBJECT MATTER |
|---|---|

**C22B 7/02**(2006.01)i; **C22B 19/32**(2006.01)i; **C22B 19/02**(2006.01)i; **C22B 7/00**(2006.01)i

According to International Patent Classification (IPC) or to both national classification and IPC

| B. | FIELDS SEARCHED |
|---|---|

Minimum documentation searched (classification system followed by classification symbols)

C22B 7/02(2006.01); B01J 19/30(2006.01); B01J 20/06(2006.01); C01G 49/02(2006.01); C01G 9/02(2006.01); C01G 9/03(2006.01); C21B 13/14(2006.01); C22B 19/00(2006.01); C22B 19/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 산화철(iron oxide), 아연(zinc), 정제(refine), 부산물(by-product), 하소(calcination), 세척(wash)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2003-0092062 A (BASF AKTIENGESELLSCHAFT) 03 December 2003 (2003-12-03)<br>See paragraphs [0004] and [0011]-[0019] and claim 1. | 1-13 |
| Y | KR 10-1989-0002856 B1 (KOREA ADVANCED INSTITUTE OF SCIENCE AND TECHNOLOGY) 05 August 1989 (1989-08-05)<br>See paragraph [0003] and claim 1. | 1-13 |
| Y | KR 10-0625521 B1 (SHIM, Jae Youn) 20 September 2006 (2006-09-20)<br>See claim 1. | 11-13 |
| A | JP 05-171310 A (MITSUBISHI MATERIALS CORP.) 09 July 1993 (1993-07-09)<br>See paragraph [0004] and claims 1-3. | 1-13 |
| A | KR 10-0366866 B1 (METALS RECYCLING TECHNOLOGIES CORPORATION) 11 February 2003 (2003-02-11)<br>See paragraph [0027] and claim 1. | 1-13 |

☐ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 August 2023** | **08 August 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| International application No. |
| --- |
| **PCT/KR2023/006857** |

| Patent document cited in search report | | | Publication date (day/month/year) | Patent family member(s) | | | Publication date (day/month/year) |
| --- | --- | --- | --- | --- | --- | --- | --- |
| KR | 10-2003-0092062 | A | 03 December 2003 | AT | 365702 | T | 15 July 2007 |
| | | | | AU | 2002-304805 | A1 | 28 October 2002 |
| | | | | CN | 1215984 | C | 24 August 2005 |
| | | | | CN | 1501888 | A | 02 June 2004 |
| | | | | DE | 10117996 | A1 | 17 October 2002 |
| | | | | DE | 10154718 | A1 | 22 May 2003 |
| | | | | DK | 1379470 | T3 | 08 October 2007 |
| | | | | EP | 1379470 | A2 | 14 January 2004 |
| | | | | EP | 1379470 | B1 | 27 June 2007 |
| | | | | EP | 1379470 | B2 | 14 March 2012 |
| | | | | EP | 1379470 | B9 | 02 May 2012 |
| | | | | JP | 2004-529843 | A | 30 September 2004 |
| | | | | JP | 4383055 | B2 | 16 December 2009 |
| | | | | US | 2004-0097768 | A1 | 20 May 2004 |
| | | | | US | 7186395 | B2 | 06 March 2007 |
| | | | | WO | 02-083569 | A2 | 24 October 2002 |
| | | | | WO | 02-083569 | A3 | 12 December 2002 |
| KR | 10-1989-0002856 | B1 | 05 August 1989 | KR | 10-1988-0005959 | A | 21 July 1988 |
| KR | 10-0625521 | B1 | 20 September 2006 | | None | | |
| JP | 05-171310 | A | 09 July 1993 | | None | | |
| KR | 10-0366866 | B1 | 11 February 2003 | AT | 149972 | T | 15 March 1997 |
| | | | | AT | 210739 | T | 15 December 2001 |
| | | | | AU | 1700595 | A | 19 June 1996 |
| | | | | AU | 1919695 | A | 29 November 1995 |
| | | | | AU | 3127995 | A | 16 February 1996 |
| | | | | AU | 3178593 | A | 03 August 1993 |
| | | | | AU | 3379997 | A | 05 January 1998 |
| | | | | AU | 3628195 | A | 29 March 1996 |
| | | | | AU | 3793097 | A | 14 January 1998 |
| | | | | AU | 3793497 | A | 14 January 1998 |
| | | | | AU | 4853593 | A | 26 April 1994 |
| | | | | AU | 662381 | B2 | 31 August 1995 |
| | | | | AU | 692229 | B2 | 04 June 1998 |
| | | | | AU | 710302 | B2 | 16 September 1999 |
| | | | | AU | 7136198 | A | 13 November 1998 |
| | | | | AU | 7138598 | A | 13 November 1998 |
| | | | | BR | 9207041 | A | 05 December 1995 |
| | | | | BR | 9509000 | A | 06 January 1998 |
| | | | | CA | 2127277 | A1 | 22 July 1993 |
| | | | | CA | 2127277 | C | 17 June 2003 |
| | | | | CA | 2188658 | A1 | 16 November 1995 |
| | | | | CA | 2199268 | A1 | 21 March 1996 |
| | | | | CA | 2199268 | C | 25 March 2003 |
| | | | | CA | 2206555 | A1 | 06 June 1996 |
| | | | | CA | 2257910 | A1 | 11 December 1997 |
| | | | | CA | 2259325 | A1 | 31 December 1997 |
| | | | | CA | 2259423 | A1 | 31 December 1997 |
| | | | | CA | 2293687 | A1 | 29 October 1998 |
| | | | | CA | 2293688 | A1 | 29 October 1998 |
| | | | | CN | 1054888 | C | 26 July 2000 |

Form PCT/ISA/210 (patent family annex) (July 2022)

## INTERNATIONAL SEARCH REPORT
### Information on patent family members

International application No.

**PCT/KR2023/006857**

| Patent document cited in search report | Publication date (day/month/year) | Patent family member(s) | | Publication date (day/month/year) |
|---|---|---|---|---|
| | | CN | 1166862 A | 03 December 1997 |
| | | DE | 69218252 T2 | 18 September 1997 |
| | | DE | 69524619 T2 | 08 August 2002 |
| | | DK | 0621855 T3 | 13 October 1997 |
| | | DK | 0783593 T3 | 08 April 2002 |
| | | EP | 0621855 A1 | 02 November 1994 |
| | | EP | 0621855 B1 | 12 March 1997 |
| | | EP | 0783593 A1 | 16 July 1997 |
| | | EP | 0783593 B1 | 12 December 2001 |
| | | EP | 0795036 A1 | 17 September 1997 |
| | | EP | 0802884 A1 | 29 October 1997 |
| | | EP | 0946767 A1 | 06 October 1999 |
| | | ES | 2099413 T3 | 16 May 1997 |
| | | ES | 2166404 T3 | 16 April 2002 |
| | | GR | 3023375 T3 | 29 August 1997 |
| | | JP | 07-502968 A | 30 March 1995 |
| | | JP | 10-503552 A | 31 March 1998 |
| | | JP | 10-509212 A | 08 September 1998 |
| | | JP | 11-500491 A | 12 January 1999 |
| | | JP | 2002-508028 A | 12 March 2002 |
| | | JP | 3370330 B2 | 27 January 2003 |
| | | KR | 10-0236663 B1 | 15 January 2000 |
| | | KR | 10-0336140 B1 | 04 September 2002 |
| | | KR | 10-1997-0705649 A | 09 October 1997 |
| | | MX | PA98010200 A | 09 February 2004 |
| | | PT | 783593 E | 29 April 2002 |
| | | RU | 2119542 C1 | 27 September 1998 |
| | | RU | 94036766 A | 10 June 1996 |
| | | US | 2004-0071619 A1 | 15 April 2004 |
| | | US | 5208004 A | 04 May 1993 |
| | | US | 5431713 A | 11 July 1995 |
| | | US | 5453111 A | 26 September 1995 |
| | | US | 5464596 A | 07 November 1995 |
| | | US | 5571306 A | 05 November 1996 |
| | | US | 5582631 A | 10 December 1996 |
| | | US | 5667555 A | 16 September 1997 |
| | | US | 5683488 A | 04 November 1997 |
| | | US | 5759503 A | 02 June 1998 |
| | | US | 5846290 A | 08 December 1998 |
| | | US | 5849063 A | 15 December 1998 |
| | | US | 5851490 A | 22 December 1998 |
| | | US | 5855645 A | 05 January 1999 |
| | | US | 5942198 A | 24 August 1999 |
| | | US | 6696029 B1 | 24 February 2004 |
| | | US | 6783744 B2 | 31 August 2004 |
| | | WO | 93-14030 A1 | 22 July 1993 |
| | | WO | 94-08057 A1 | 14 April 1994 |
| | | WO | 95-30626 A1 | 16 November 1995 |
| | | WO | 96-02679 A1 | 01 February 1996 |
| | | WO | 96-08585 A1 | 21 March 1996 |

Form PCT/ISA/210 (patent family annex) (July 2022)

**INTERNATIONAL SEARCH REPORT**
Information on patent family members

International application No.

**PCT/KR2023/006857**

| Patent document cited in search report | Publication date (day/month/year) | Patent family member(s) | | Publication date (day/month/year) |
|---|---|---|---|---|
| | | WO | 96-17090 A1 | 06 June 1996 |
| | | WO | 97-46722 A1 | 11 December 1997 |
| | | WO | 97-49637 A1 | 31 December 1997 |
| | | WO | 97-49835 A1 | 31 December 1997 |
| | | WO | 98-48063 A1 | 29 October 1998 |
| | | WO | 98-48066 A1 | 29 October 1998 |

Form PCT/ISA/210 (patent family annex) (July 2022)